# EUROPEAN PATENT APPLICATION

(11) **EP 3 528 372 A1**
(43) Date of publication of application: **21.08.2019**
(21) Application number: 18157406.2
(22) Date of filing: 19.02.2018
(51) Int. Cl.: H02K 15/04, H02K 7/18

(54) **FORMATION OF STATOR COILS FOR USE IN CONCENTRATED WINDING ELECTRICAL MACHINE**

(71) Applicant: Siemens Gamesa Renewable Energy A/S, 7330 Brande (DK)
(72) Inventor: Samanta, Subhra, 7430 Ikast (DK); Azar, Ziad, Sheffield, S10 4ED (GB)
(74) Representative: Aspacher, Karl-Georg

(57) **Abstract**

It is described a method for manufacturing a stator assembly (110) for an electrical machine (100) with a concentrated winding stator design. The method comprises (a) providing a stator coil (214, 314a) having a first coil axis (315) and a first spatial design with, within a plane being perpendicular to the first coil axis (315), a first length (L1) along a first direction (X) and a first width (W1) along a second direction (Y); (b) exerting on the stator coil (314a) a tension force (Ft) along the first direction (X) and/or a compressive force (Fc) along the second direction (Y) such that the first spatial design transforms into a second spatial design with a second length (L2) and a second width (W2), wherein the second length (L2) is larger than the first length (L1) and the second width (W2) is smaller than the first width (W1); and (c) placing the stator coil (314b) having the second spatial design around a single stator tooth (212a) of a stator yoke (212) of the stator assembly (110). Further described are a stator assembly (110) being manufactured with the described method, an electrical machine (100) with such a stator assembly (110) and a wind turbine (180) comprising such an electrical machine (100) as electrical generator.

## Description

### Field of invention

The present invention relates to the technical field of electrical machine having a so-called concentrated winding design. In particular, the present invention relates to a method for manufacturing a stator assembly having a concentrated winding design as well as a stator assembly and an electrical machine having a concentrated winding design. Further, the present invention relates to a wind turbine comprising such a machine as electrical generator.

### Art Background

An electrical machine, such as a generator of a wind turbine, comprises a stator assembly and a rotor assembly. When rotating, electromagnets or permanent magnets of the rotor assembly generate a time varying magnetic flux, which is picked up by stator coils of the stator assembly.

The stator assembly comprises a stator yoke having a plurality of teeth, around which a plurality of stator coils are wound or coiled up. Thereby, the stator coils are predominantly located within slots, which are defined between respectively two neighboring teeth. Specifically, each stator coil is arranged within two adjacent slots. To form a complete coil it however is not possible to avoid so called coil heads in any type of machine. A coil head is a portion of a coil which is not embedded within a slot.

In concentrated winding topology a configuration one stator coil is wound around a single tooth only. By contrast thereto, a stator assembly in which each stator coil is wound around more than one tooth is called a distributed winding stator assembly. In other words, by contrast to the concept of distributed winding in "concentrated winding" the stator coil width is normally the same as the width of a stator tooth. This means that also the stator coils must have a comparatively narrow width

However, forming a narrow stator coil creates difficulties with regard to a necessary electric insulation in particular between neighboring stator coils. Usual tooling for producing such an electric insulation is not small enough to enter the narrow inner region of the stator coil. Therefore, for concentrated winding applications it is typically necessary to produce the electric insulation manually. However, this is very time consuming and often results in quality problems depending on the skill of the person carrying out the corresponding insulation procedure.

There may be a need for improving manufacturing of concentrated winding stator assemblies.

### Summary of the Invention

This need may be met by the subject matter according to the independent claims. Advantageous embodiments of the present invention are described by the dependent claims.

According to a first aspect of the invention there is provided a method for manufacturing a stator assembly for an electrical machine, in particular for an electrical generator and further in particular for a wind turbine, wherein the stator assembly is realized with a concentrated winding stator design. In such a design respectively one stator coil is wound exclusively around one stator tooth. The provided method comprises (a) providing a stator coil having a first coil axis and a first spatial design width, within a plane being perpendicular to the first coil axis, a first length along a first direction and a first width along a second direction, the second direction being different from the first direction; and (b) exerting on the stator coil a tension force along the first direction and/or a compressive force along the second direction such that the first spatial design transforms into a second spatial design with a second coil axis and a second length along the first direction and a second width along the second direction, wherein the second length is larger than the first length and the second width is smaller than the first width. The method further comprises (c) placing the stator coil having the second spatial design around a single stator tooth of a stator yoke of the stator assembly.

The described method is based on the idea that manufacturing a stator coil (for a stator assembly with a concentrated winding stator design) can be significantly facilitated when using a two-step manufacturing procedure, wherein in a first step the stator coil is manufactured as a stator coil being normally used for a stator assembly being realized with the so-called distributed winding design. Thereby, compared to the (final) second spatial design being necessary for "concentrated winding" the (intermediate) first spatial design of the stator coil differs from the second spatial design in that the width of the coil is much bigger. In other words, compared to the first spatial design the second spatial design is more elongated, narrower, and has a larger length and a smaller width.

The main advantage of the described method may be seen in the matter of fact that for manufacturing the stator coil in the first spatial design usual tooling can be employed. Transforming the stator coil from the first spatial design to the second spatial can be accomplished with a special but very simple tooling (for concentrated winding). This tooling can be kept very simple because the only action(s) needed for performing the second step is/are the exertion of the tension force and/or the compressive force.

The described transformation of the stator coil from the first spatial design to the second spatial design can be considered as to represent a controlled transformation process, by means of which a stator coil being suitable for a distributed winding stator assembly is transferred into a stator coil being suitable for a concentrated winding stator assembly.

Preferably, the first coil axis is an axis of symmetry for the first spatial design and/or the second coil axis is an axis of symmetry for the second spatial design. This symmetry may be in particular a point symmetry when considering the geometry within a plane perpendicular to the first coil axis and/or to the second coil axis.

The first direction being associated with the length of the coil design and the second direction being associated with the width of the coil design are preferably perpendicular to each other. This may provide the advantage that the coil design transformation procedure can be carried out, controlled, and/or calculated respectively simulated in advance within a Cartesian coordinate system. This facilitates in particular a control of the described method and increases the reliability of the described method.

According to an embodiment of the invention the method further comprises electrically insulating the provided stator coil with an electric insulation material. This may provide the advantage that insulating the coil will be carried out when the stator coil is present or given in the shorter but in particular in the wider spatial design. This may allow using known tooling for insulating. Further, for many (concentrated winding) stator assemblies it is not possible at all to create an appropriate tooling for a proper insulating procedure because of a very narrow winding design (with a very small width). Therefore, with the described method a manual insulating can be avoided. This may increase for many applications the efficiency for manufacturing concentrated winding stator assemblies.

At this point it is mentioned that the described insulation procedure does not refer to (the wire of) the turns of the stator coil. The turns of the stator coil is typically already insulated. Here, "electrically insulating" may particularly mean that the stator coil (as a whole) is electrically insulated from a neighboring or adjacent stator coil.

According to a further embodiment of the invention (the step of) electrically insulating comprises wrapping an insulating tape around at least a portion of the stator coil (in an at least approximately spiral manner). This may provide the advantage that a standard insulation taping machine can be employed.

According to a further embodiment of the invention the first coil axis is oriented parallel to the second coil axis. This may provide the advantage that the entire formation process of the stator coil from the first spatial design to the second spatial design can be carried out within one single plane. As a consequence, the formation process can be controlled in a particular reliable manner.

According to a further embodiment of the invention the first coil axis is collinear with the second coil axis. In this case the first coil axis and the second coil axis are the same and can be considered as to be a common coil axis.

The described collinearity of the two axis may provide the advantage that the above mentioned formation process can be accomplished in a highly symmetric manner. This means that portions of the stator coil which, with respect to the (common) axis, are located on opposite sides, are formed respectively displaced to the same extent. Thereby, some surface portions are displaced towards the common coil axis and other surface portions are displaced away from the common coil axis.

Performing the formation process in a symmetric manner may in particular provide the advantage that the overall mechanical strain on and/or within the material of the stator coil will be comparatively small. In other words, there is not at least one portion of the stator coil, which undergoes a larger formation then all other portions. Such a particular large formation could result in a destruction of the at least one surface portion, which is subjected to the highest mechanical strain.

According to a further aspect of the invention there is provided a stator assembly for an electrical machine. The stator assembly comprises (a) a stator yoke with a plurality of stator teeth; and (b) a plurality of stator coils, each being manufactured by means of a process in which a tension force along a first direction and/or a compressive force along a second direction is exerted on the stator coil such that a first spatial design of the stator coil transforms into a second spatial design of the stator coil. Thereby, (a) in the first spatial design the stator coil has a first coil axis and a first length along the first direction and a first width along the second direction, wherein the first direction and the second direction are within a plane being perpendicular to the first coil axis. Further, (b) in the second spatial design the stator coil has a second coil axis and a second length along the first direction and a second width along the second direction, the second length being larger than the first length and the second width being smaller than the first width. Furthermore, respectively one stator coil is located around one single stator tooth. The latter means that the design of the provided stator assembly is "concentrated winding".

Also the described stator assembly is based on the idea that a manufacturing of a stator assembly with a concentrated winding design can be facilitated when, before arranging or placing appropriately shaped stator coils on the stator yoke, the stator coils are formed from an initial less elongated design to a final more elongated design which in accordance with the concept of concentrated winding is suitable for placing the stator coils on respectively around one single stator tooth.

The described stator yoke may be formed from a lamination stack of magnetic material wherein each lamination is made from a single piece fully surrounding a rotational axis of the stator assembly (corresponding to the rotational axis of a rotor assembly, which together with the stator assembly forms an electrical machine, in particular an electric generator (for a wind turbine). Alternatively, the stator yoke may be realized by assembling together at least two stator yoke segments.

According to a further aspect of the invention there is provided an electrical machine, which may be realized as an electrical generator e.g. for a wind turbine. The provided electrical machine comprises (a) a stator assembly as described above; and (b) a rotor assembly being rotatably supported at the stator assembly.

The rotor assembly may comprise permanent magnets. In case of a generator these magnets, when rotating around a rotational axis of the electrical machine, generate a time varying magnetic flux trough the stator coils.

However, it is pointed out that a time varying magnetic flux and a corresponding excitation of the stator coils can also be realized by providing the rotor assembly with electromagnets. In this case the electrical machine is called an electrically excited machines.

According to a further embodiment of the rotor assembly is located radially outward from the stator assembly. This means that the described machine is designed in a so-called inner stator - outer rotor configuration, which in particular when being used as a large generator within a nacelle of a wind turbine, exhibits several advantages compared to a generator being realized in an outer stator - inner rotor configuration.

However, the described coil forming procedure not limited to inner stator - outer rotor configuration. The described electrical machine may also be realized with an outer stator - inner rotor configuration.

According to a further aspect of the invention there is provided a wind turbine for generating electrical power. The provided wind turbine comprises (a) a tower; (b) a wind rotor, which is arranged at a top portion of the tower and which comprises at least one blade; and (c) an electrical machine as described above and configured as an electric generator, which is mechanically coupled with the wind rotor.

The described wind turbine may be configured for being operated on-shore or off-shore. The wind turbine may comprise a gear being a part of a so-called drive train, which mechanically connects the wind rotor with the electrical generator. Alternatively, the wind turbine, which is a so-called direct drive (DD) wind turbine, does not comprise such a gear such that the wind rotor is directly coupled with the rotor assembly of the electric generator.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a wind turbine comprising an electrical generator in accordance with an embodiment of the invention.
- Figure 2: shows an enlarged cross sectional view of the stator assembly and the rotor assembly of the generator 12 of a first embodiment of the electric generator of the wind turbine of Figure 1.
- Figures 3 to 5: illustrate a formation process for a stator coil from a first design (for "distributed winding") to a second design (for "concentrated winding").

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

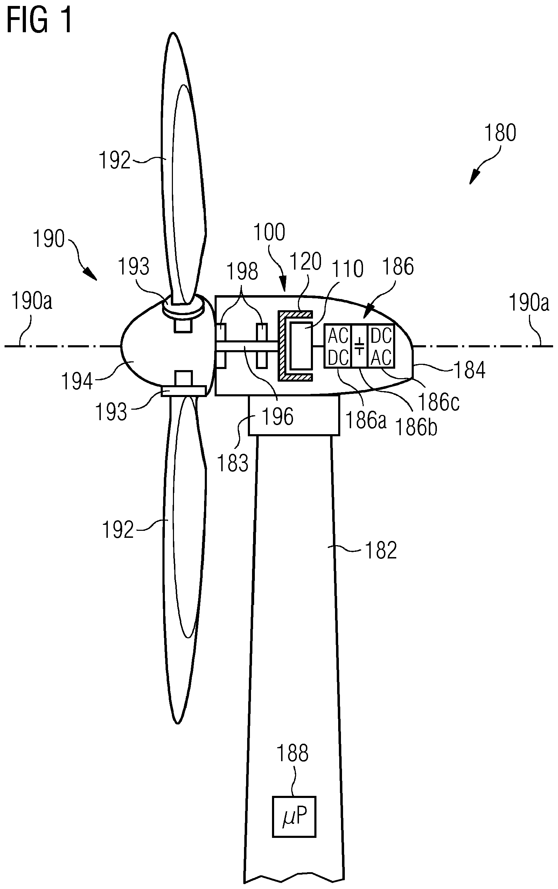

**Figure 1** shows a wind turbine 180 according to an embodiment of the invention. The wind turbine 180 comprises a tower 182, which is mounted on a non-depicted fundament. On top of the tower 182 there is arranged a nacelle 184. In between the tower 182 and the nacelle 184 there is provided a yaw angle adjustment device 183, which is capable of rotating the nacelle 184 around a not depicted vertical axis, which is aligned with the longitudinal extension of the tower 182. By controlling the yaw angle adjustment device 183 in an appropriate manner it can be made sure that during a normal operation of the wind turbine 180 the nacelle 184 is always properly aligned with the current wind direction.

The wind turbine 180 further comprises a wind rotor 190 having three blades 192. In the perspective of Figure 1 only two blades 192 are visible. The wind rotor 190 is rotatable around a rotational axis 190a. The blades 192, which are mounted at a hub 194, extend radially with respect to the rotational axis 190a.

In between the hub 194 and a blade 192 there is respectively provided a blade adjustment device 193 in order to adjust the blade pitch angle of each blade 192 by rotating the respective blade 192 around a not depicted axis being aligned substantially parallel with the longitudinal extension of the blade 192. By controlling the blade adjustment device 193 the blade pitch angle of the respective blade 192 can be adjusted in such a manner that at least when the wind is not so strong a maximum wind power can be retrieved from the available wind power. However, the blade pitch angle can also be intentionally adjusted to a position, in which only a reduced wind power can be captured.

Within the nacelle 184 there is provided an electric generator 100. In accordance with basic principles of electrical engineering the electric generator 100 comprises a stator assembly 110 and a rotor assembly 120. According to the embodiment described here the electric generator 100 is realized with a so called inner stator - outer rotor configuration. Permanent magnets being attached to the rotor assembly 120 travel around stator segments being attached at the stator assembly 110. In between the stator segments, which comprise stator coils for picking up a time alternating magnetic induction, and the permanent magnets, there is formed an air gap. The stator assembly 110 is realized in the concentrated winding design. Further details are given below.

The wind rotor 190 is rotationally coupled with the rotor assembly 110 by means of a rotatable shaft 196. A schematically depicted bearing assembly 198 is provided in order to hold in place both the wind rotor 190 and the rotor assembly 120. As can be seen from Figure 1, the shaft 196 extends along the rotational axis 190a. The rotational axis 190a is identic with a center axis of the stator assembly 110.

It is mentioned that the wind turbine 180 is a so-called direct drive wind turbine wherein between wind rotor 190 and rotor assembly 110 there is not provided a gear box. However, it is mentioned that the electric generator 100 could also be driven indirectly via a gear box, which may be used to convert the number of revolutions of the wind rotor 190 typically into a higher number of revolutions of the rotor assembly 120.

In order to provide an AC power signal being electrically matched with a power signal of a utility grid the electric output of the stator assembly 110 is electrically connected to a power converter 186. The power converter 186 comprises a generator side AC-DC converter 186a, an intermediate DC bridge 186b, and a grid side DC-AC converter 186c. The AC-DC converter 186a and the DC-AC converter 186c comprise several not depicted high power semiconductor switches, which in a known manner are arranged in a bridge configuration for each phase of an AC current provided by the electric generator 100.

The wind turbine 180 further comprises a control system 188 for operating the wind turbine 100 in a highly efficient manner. Apart from controlling for instance the yaw angle adjustment device 183 the depicted control system 188 is also used for adjusting the blade pitch angle of the blades 192 of the wind rotor 190 in an optimized manner.

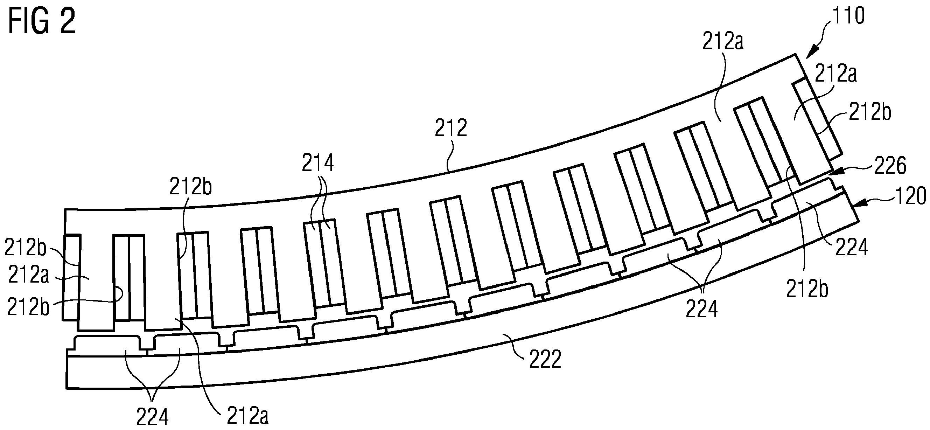

**Figure 2** shows an enlarged cross sectional view of the stator assembly 110 and the rotor assembly 120 of the generator 100, which is depicted schematically in Figure 1. The stator assembly 110 comprises a stator frame structure 212 which itself includes a stator yoke 212 and a plurality of stator teeth 212a. Due to the inner stator - outer rotor configuration the stator teeth 212a are directed radially outward from a center axis, which in Figure 1 is denominated with reference numeral 190a. In between two neighboring teeth 212a there are formed recesses. According to the nomenclature used here one recess corresponds to two neighboring slots 212b (in between two neighboring teeth 212a). Respectively two slots 212b are adjacent to one tooth 212a. This means that one recess is "occupied" by two slots 212b, wherein each slot 212b is assigned to one stator tooth 212a. Further, in accordance with the concept of concentrated winding two slots 212b being adjacent to one tooth 212a are occupied by exactly one stator coil 214. In accordance with basic electric principles of an electrical generator the stator coils 214 are subdivided into different groups of stator coils 214, wherein each group is assigned to one electric phase. The corresponding electric circuitry for such a "grouping" is not depicted in Figure 2 in order to not to obscure an understanding of this description.

The rotor assembly 120, which is radially external with respect the stator assembly 110 and which is rotatable about the center axis 190a (see Figure 1), comprises a rotor frame structure 222 and a plurality of permanent magnets 224. These permanent magnets 224 are attached to an inner side of the rotor frame structure 222, which inner side faces the stator assembly 110. A circumferential air gap 226 is provided between the stator assembly 110 and the rotor assembly 120.

Each of the stator teeth 212a has a length, which is measured along a direction being perpendicular to the plane of drawing of Figure 2. The width of each stator tooth 212a is measured along the circumferential direction (around the center axis), which circumferential direction is within the plane of drawing of Figure 2. It is obvious that in order to complete a stator coil 214 around a stator tooth 212a it is necessary to provide so called end winding portions or coil heads which are not located within the respective slot. A not depicted front end winding portion or front coil head of the stator coils 214 protrudes out from the plane of drawing of Figure 2.

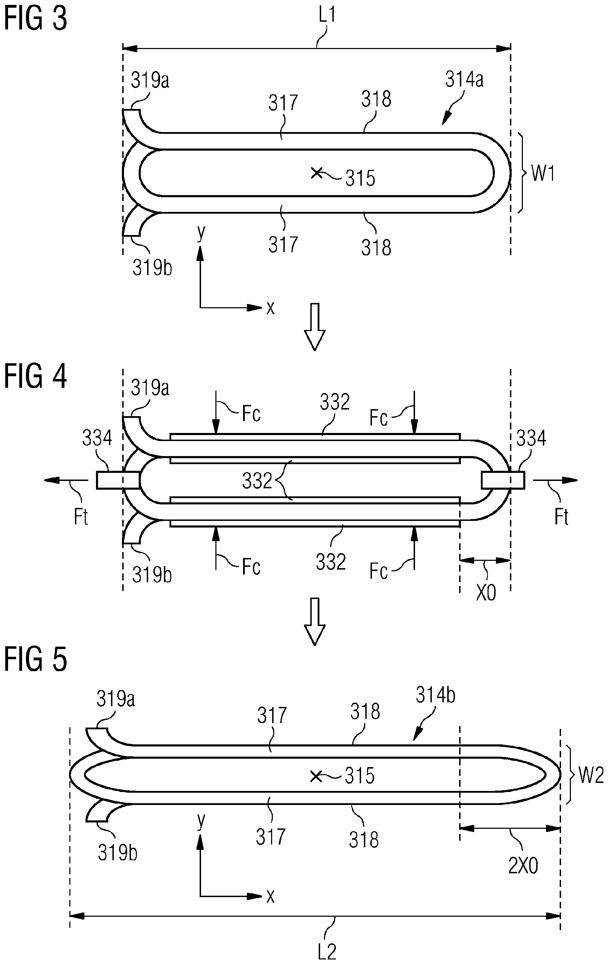

**Figures 3 to 5** illustrate a formation process for a stator coil from a first spatial design (for "distributed winding") to a second spatial design (for "concentrated winding"). Figure 3 shows the stator coil 314a when being in the first spatial design. The stator coil 314a comprises several turns, which are arranged in a spiral manner around a first coil axis 315. An upper turn of the coil (above the plane of drawing) comprises a first terminal 319a. A lower turn of the coil (below the plane of drawing) comprises a second terminal 319b. All (not depicted) intermediate turns are connected in serious between the upper most turn with the first terminal 319a and the lower most turn with the second terminal 319b.

The first spatial design of the stator coil 314a is characterized by a first length L1 (measured along an X axis) and a first with W1 (measured along an Y axis). Although the stator coil 314a already has an elongated shape, the first width W1 is sufficiently large such that dedicated tooling equipment being used for producing the stator coils 314a can be used. Specifically, the inner region of the stator coil 314a (where the first coil axis 315 is depicted) is big enough (along the Y direction) in order to allow the use of such (known) tooling equipment.

The turns of the stator coil 314a comprise an electric conductive material 317, preferably copper. In order to insulate neighboring coils from each other an electric insulation material 318 is provided around the coil (a bundle of turns). According to the embodiment described here the electric insulation material 318 comprises a synthetic tape which is wrapped around the complete stator coil 314a. The above mentioned (known) tooling equipment is used for wrapping this tape around the complete stator coil in an automatic manner.

In order to make the stator coil 314a suitable for "concentrated winding" the spatial design of the stator coil 314a has to be modified towards a more elongated shape. According to the embodiment described here, the corresponding formation of the stator coil 314a is carried out by means of a compression tool 332 and a tension tool 334, in both of which the stator coil 314a is inserted. This is illustrated in Figure 4.

In the depicted embodiment the compression tool 332 has a length (along the X direction) such that two portions of the stator coil 314a, which portions are not inserted into the compression tool 332, correspond to so-called end windings or coil heads. In an assembled state of a corresponding stator assembly, these end windings or coil heads are not located within the stator slots (see reference number 212b in Figure 2). In the first spatial design of the stator coil 314a the length of the end windings or coil heads (along the X direction) is denominated with "X0" in Figure 4.

In order to form the stator coil 314a compression forces Fc are exerted on and via the compression tool 332 and tension forces Ft are exerted on and via the tension tool 334. The final state of the stator coil is depicted in Figure 5. The formed stator coil, which is now suitable for "concentrated winding", is denominated with reference numeral 314b. As can be taken from Figure 5, the stator coil 314b has a second length L2 (along the X direction) and a second with W2 (along the Y direction). Further, due to the formation process the length of the end windings respectively the length of the coil heads is increased. According to the embodiment described here this increased length is double as compared to the corresponding initial length. The corresponding double coil head length is "2X0".

In the depicted embodiment the compression force Fc and the tension force F are applied in a symmetric manner. This means that in the formation process the second coil axis of stator coil 314b is the same as the first coil axis of the stator coil 314a. In other words, there is a common coil axis for both spatial designs, which common coil axis is denominated with reference numeral 315.

Using the described stator coil formation process for producing "concentrated winding" stator coils may provide in particular the following advantages:
(a) A manufacture of "narrow" stator coils (for "concentrated winding") can be carried out with a combination of common electric insulation taping techniques and the described stator coil formation procedure.
(b) There is no more a need for using a small role of insulation tape to insulate the stator coil manually.
(c) In the (broader) first spatial design a coil insulation can be realized with a simple and known electric insulation taping machine.
(d) A high quality of electric insulation can be achieved because the insulation procedure does not depend on manual skill.
(e) An automated production of appropriate stator coils is possible. Hence, production time will be reduced.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method for manufacturing a **stator assembly** (110) for an **electrical machine** (100), in particular for an electrical generator (100) and further in particular for an electrical generator in a wind turbine (180), wherein the stator assembly (110) is realized with a **concentrated winding stator design,** in which respectively one stator coil (214) is wound exclusively around one stator tooth (212a), the method comprising
providing a **stator coil** (214, 314a) having a **first coil axis** (315) and a **first spatial design** width, within a **plane** being perpendicular to the first coil axis (315), a **first length** (L1) along a **first direction** (X) and a **first width** (W1) along a **second direction** (Y), the second direction (Y) being different from the first direction (X);
exerting on the stator coil (314a) a **tension force** (Ft) along the first direction (X) and/or a **compressive force** (Fc) along the second direction (Y) such that the first spatial design transforms into a **second spatial design** with a **second coil axis** (315) and a **second length** (L2) along the first direction (X) and a **second width** (W2) along the second direction (Y), wherein
the second length (L2) is larger than the first length (L1) and
the second width (W2) is smaller than the first width (W1); and
placing the stator coil (314b) having the second spatial design around a single **stator tooth** (212a) of a **stator yoke** (212) of the stator assembly (110).

2. The method as set forth in the preceding claim, further comprising
electrically insulating the provided stator coil (314a) with an **electric insulation material** (318)

3. The method as set forth in the preceding claim, wherein electrically insulating comprises
**wrapping** an insulating tape (318) around at least a portion of the stator coil (314a).

4. The method as set forth in any one of the preceding claims, wherein
the **first coil axis** (315) is oriented **parallel** to the **second coil axis** (315).

5. The method as set forth in the preceding claim, wherein the first coil axis (315) is **collinear** with the second coil axis (315).

6. A stator assembly (110) for an electrical machine (100), the stator assembly (110) comprising
a **stator yoke** (212) with a plurality of stator teeth (212a); and
a plurality of **stator coils** (214), each being manufactured by means of a process in which a **tension force** (Ft) along a **first direction** (X) and/or a **compressive force** (Fc) along a **second direction** (Y) is exerted on the stator coil (214, 314a) such that a **first spatial design** of the stator coil (314a) transforms into a **second spatial design** of the stator coil (314b), wherein
(a) in the first spatial design the stator coil (314a) has a **first coil axis** (315) and a **first length** (L1) along the first direction (X) and a **first width** (W1) along the second direction (Y), wherein the first direction (X) and the second direction (Y) are within a plane being perpendicular to the first coil axis (325),
(b) in the second spatial design the stator coil (314b) has a **second coil axis** (315) and a **second length** (L2) along the first direction (X) and a **second width** (W2) along the second direction (Y),
the second length (L2) being larger than the first length (L1) and
the second width (W2) being smaller than the first width (W1), and
(c) respectively one stator coil (214, 314b) is located around one single stator tooth (212a).

7. Electrical machine (100), in particular an electrical generator (100), the electrical machine (100) comprising
a **stator assembly** (110) as set forth in the preceding claim; and
a **rotor assembly** (120) being rotatably supported at the stator assembly (110).

8. Electrical machine (100) as set forth in the preceding claim, wherein
the rotor assembly (120) is located **radially outward** from the stator assembly (110) or
the rotor assembly is located **radially inward** from the stator assembly.

9. Wind turbine (180) for generating electrical power, the wind turbine (180) comprising
a **tower** (182);
a **wind rotor** (190), which is arranged at a top portion of the tower (182) and which comprises at least one **blade** (192); and
an electrical machine (100) as set forth in the preceding claim and configured as an **electrical generator** (100), which is mechanically coupled with the wind rotor (190) .
